# EUROPÄISCHE PATENTSCHRIFT

(11) **EP 0 789 169 B1**
(45) Veröffentlichungstag und Bekanntmachung des Hinweises auf die Patenterteilung: **02.05.2002**
(21) Anmeldenummer: 97100698.6
(22) Anmeldetag: 16.01.1997
(51) Int. Cl.: F16H 19/00, G01D 15/24

(54) **Registriergerät mit einem Getriebe**
Recorder comprising a transmission
Appareil d'enregistrement comportant une transmission

(30) Priorität: 07.02.1996 DE 29602056 U
(43) Veröffentlichungstag der Anmeldung: 13.08.1997
(73) Patentinhaber: Mannesmann VDO AG, 60326 Frankfurt (DE)
(72) Erfinder: Riester, Thomas, Dipl.-Ing. (FH), 78052 Villingen-Schwenningen (DE); Höni, Helmut, Dipl.-Ing. (FH), 78733 Aichhalden (DE)

(56) Entgegenhaltungen:
- EP-A- 0 339 225
- EP-A- 0 644 357
- DE-C- 491 826
- GB-A- 1 235 155
- US-A- 4 601 213
- PATENT ABSTRACTS OF JAPAN vol. 008, no. 269 (P-319), 8.Dezember 1984 -& JP 59 135668 A (TOSHIBA KK), 3.August 1984,

## Beschreibung

Die Erfindung betrifft ein Registriergerät mit einem Getriebe für den Antrieb einer Steuerwelle einer auf einer Montageplatine angeordneten Mehrspurregistriervorrichtung, wobei zwischen den sich im wesentlichen rechtwinklig kreuzenden Achsen eines der Steuerwelle zugeordneten Zahnrades und eines treibenden Zahnrades ein Abstand besteht, der eine zwischengeschaltete Antriebsverbindung erforderlich macht. Derartige Registriergeräte sind allgemein bekannt.

Bei derartigen in der Regel durch Anordnungsprobleme bedingten Getrieben werden in der Feinwerktechnik, wenn Zwischenräder aus Platzgründen und/oder aufgrund des sich zwangsläufig ergebenden Zahnspiels in Fällen von Start-Stopp-Betrieb oder Umkehr der Antriebsrichtung nicht verwendet werden können, den Achsabstand überwindende Wellen vorgesehen und die Antriebsumlenkung mittels Kegelrad-, Schraubrad- oder Kronradverbindungen verwirklicht.

Von den Abwälzproblemen abgesehen, die bei Kronradverbindungen aufgrund der Zahnformen prinzipieller Art sind und bei Kegelradverbindungen durch gegebenenfalls nicht exakt schneidende Achsen entstehen, ergeben sich insbesondere bei durch Start-Stopp-Betrieb oder Umkehr der Antriebsrichtung und durch Auftreten hoher Beschleunigungen belasteten Getrieben außerdem Schwierigkeiten, wenn es erforderlich ist, die Bedingungen der Großserienfertigung einzuhalten. Das heißt, großseriengerechte Toleranzen einzuhalten und die vorgesehene Welle aus Kunststoff vorzugsweise mit angeformten Zahnrädern spritzgiesstechisch herzustellen. Bei nicht kontinuierlichem Kraftfluß und relativ hohen Beschleunigungswerten, wie sie beispielsweise bei der Steuerung von Mehrspurregistriervorrichtungen auftreten, und zwar mit einer relativ hohen Frequenz, besteht zusätzlich die Gefahr von Torsionen, die es bei einer derartigen Anwendung unmöglich machen, die geforderte Registriergenauigkeit einzuhalten.

Mit der DE 49 18 26 C ist eine Vorrichtung bekannt geworden, mit welcher mit einem verhältnismässig geringen, getrieblichen Raumbedarf eine große Über-/Untersetzung verwirklicht werden kann. Dabei greift beispielsweise ein längsverschieblich gelagertes, treibendes Zahnrad sowohl in eine feststehende als auch in eine verschiebbar gelagerte Zahnstange ein. Ein Ausführungsbeispiel zeigt eine Anzeigevorrichtung, bei der die verschiebbare Zahnstange eine Zeigerwelle antreibt, welche rechtwinklig zur Achse des treibenden Zahnrades angeordnet ist. Das treibende Zahnrad wird bei dem genannten Ausführungsbeispiel relativ langsam, schwimmergesteuert angetrieben. Außerdem ist nicht erkennbar wie die bewegliche Zahnstange gelagert bzw. geführt ist.

Es bestand somit die Aufgabe für ein Getriebe eines Registriergerätes zum Antrieb einer Mehrspurregistriervorrichtung mit einem treibenden Zahnrad und einem mit Abstand angeordneten getriebenen Zahnrad, wobei sich die Achsen der Zahnräder kreuzen, eine funktionell und fertigungstechnisch optimierte, kostengünstige Antriebsverbindung zu schaffen.

Die Lösung der Aufgabe beschreibt der Anspruch 1. Eine bevorzugte Ausgestaltung der Erfindung geht aus den Unteransprüchen hervor.

Der entscheidende Vorteil, den die erfindungsgemäße Antriebsverbindung zur Steuerung des Registrierorgans einer Mehrspurregistriervorrichtung bietet, ist in der besonders einfachen Herstellbarkeit der insbesondere geradverzahnten Zahnstange und der durch das Zusammenwirken mit geradverzahnten Stirnrädern garantierten fehlerfreien Abwälzfunktion zu sehen. Außerdem ist mit der gefundenen Lösung zur Übertragung einer Drehbewegung unter Zwischenschaltung eines geradlinig bewegten Getriebeelementes, nämlich einer Zahnstange, welche den Kraftfluß um 90° umlenkt, eine bessere Raumnutzung möglich. Dies bedeutet weniger Raumbedarf und/oder größere Gestaltungsfreiheit bei der Anordnung der Antriebsverbindung. Beispielsweise läßt sich der Abstand einer der Verzahnungen zur Ebene der anderen Verzahnung in relativ weiten Grenzen wählen und es lassen sich unterschiedliche Verzahnungsmodule vorsehen. Da die Kraftübertragung in Längsrichtung der Zahnstange also in Richtung der größten Steifigkeit erfolgt, ist es ferner ohne weiteres möglich die Zahnstange als Spritzgiessteil herzustellen. Erwähnenswert ist außerdem, daß die Zahnstange in einem weitgehend wählbaren Abstand zu einer Montageplatine verschiebbar angeordnet, gegebenenfalls unmittelbar auf der Montageplatine gelagert werden und somit bei entsprechender Anordnung der anzutreibenden Steuerwelle und des treibenden, dem Stellmotor zugeordneten Zahnrades eine relativ flache Antriebsverbindung geschaffen werden kann. Der Führung und Halterung der Zahnstange an der Montageplatine dienen in Outserttechnik angeformten Führungselemente und/oder für andere Zwecke vorgesehene Bauteile. Mit einer Schrägverzahnung der Zahnstange, gegebenenfalls auch nur einer Verzahnung sowie des mit dieser in Eingriff stehenden Zahnrades wäre es möglich einen Querschub und somit definiertere Führungsverhältnisse zu erzielen.

Im folgenden sei die Erfindung anhand der beigefügten Zeichnungen, die ein Registriergerät betreffen, näher erläutert.
Es zeigen:
Figur 1 eine Draufsicht des erfindungsgemäßen Getriebes zusammen mit einer die Getriebeelemente tragenden weitgehend freigeschnittenen Montageplatine,
Figur 2 eine Ansicht des Getriebes gemäß der Pfeilrichtung A in Figur 1,
Figur 3 eine perspektivische Darstellung des Getriebes.

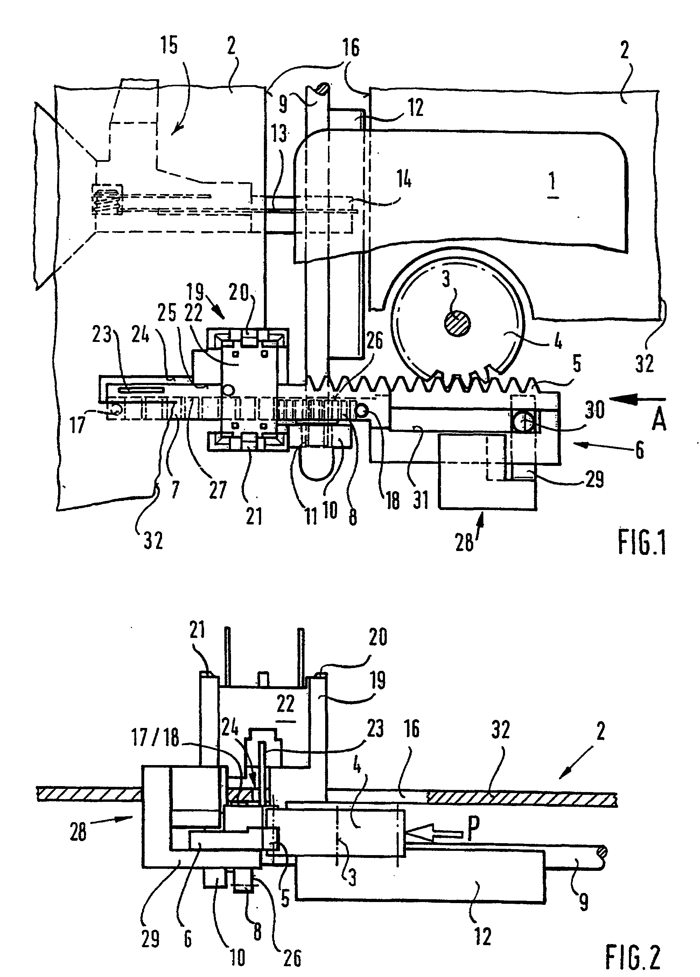

Die Draufsicht, Figur 1, zeigt einen teilweise dargestellten Stellmotor 1, der auf einer Montageplatine 2 befestigt ist. Mit 3 ist in diesem Falle nicht die Motorwelle sondern eine Abgangswelle eines dem Stellmotor 1 zugeordneten Untersetzungsgetriebes bezeichnet. Die Abgangswelle 3 greift; wie aus der Figur 2 hervorgeht, auf die Gegenseite der Montageplatine 2 durch. Sie trägt ein stirnverzahntes Zahnrad 4, das mit einer Verzahnung 5 einer Zahnstange 6 in Eingriff steht. Die Zahnstange 6 weist eine weitere Verzahnung 7 auf, in die ein ebenfalls stirnverzahntes Zahnrad 8 eingreift. Dieses ist auf einer als Steuerwelle bezeichneten Welle 9, die in an der Montageplatine 2 vorzugsweise in Outserttechnik angeformten Lagerböcken 10, unter Verwendung von Laufbuchsen 11 gelagert ist, befestigt. An der Steuerwelle 9 ist wenigstens ein Nocken 12 angeformt, an welchem ein mit einer Schenkelfeder 13 zusammenwirkender Arm 14 beispielsweise einer Mehrspurregistriervorrichtung 15 angreift. Mit 16 ist eine in der Montageplatine 2 vorgesehene Aussparung bezeichnet. Aus der Figur 1 ist ferner noch ersichtlich, daß an der Zahnstange 6 Noppen 17 und 18 ausgebildet sind, die der Auflage auf der Montageplatine 2 dienen. Ein mit 19 bezeichneter ebenfalls an der Montageplatine 2 angeformter Halter ist mit Riegeln 20 und 21 versehen und dient der Aufnahme einer Lichtschrankeneinheit 22 zur Steuerung des Stellmotors 1. Als Steuerelement dient eine an der Zahnstange 6 angeformte Fahne 23, welche durch einen in der Montageplatine 2 ausgebildeten Schlitz 24 greift.

Der Führung der Zahnstange 6 dienen in Blattebene einerseits eine an dem Halter 19 angeformte Führungsfläche 25 sowie die Flanschfläche 26 des Zahnrades 8, die mit einer Begrenzungsfläche 27 der Verzahnung 7 zusammenwirkt. Rechtwinklig zur Blattebene ist die Zahnstange 6 durch die Montageplatine 2 und die Stirnseite des Zahnrades 8 geführt. Andererseits ist ein Lagerkörper 28 vorgesehen, welcher die Zahnstange 6 gabelförmig umgreift und dadurch eine Führung rechtwinklig zur Blattebene bietet und an dessen einem Schenkel 29 ein Zapfen 30 angeformt ist, welcher in einen in der Zahnstange 6 ausgebildeten Schlitz 31 eingreift und damit eine Führung in Blattebene darstellt. Gleichzeitig kann der Zapfen 30 die Funktion eines Endanschlages, an dem das Stellsystem normiert wird, ausüben.

Die Figur 2 zeigt eine Ansicht des beschriebenen Getriebes in Pfeilrichtung A in Figur 1, wobei die Bauelemente der Mehrspurregistriervorrichtung 15 und der Stellmotor 1, weil letztlich auch nicht erfindungswesentlich, nicht dargestellt sind. Die Schnittfläche 32 der Montageplatine 2 entspricht dem Freischnitt in Figur 1. Der Pfeil P symbolisiert den vom Stellmotor 1 ausgehenden Kraftfluß.

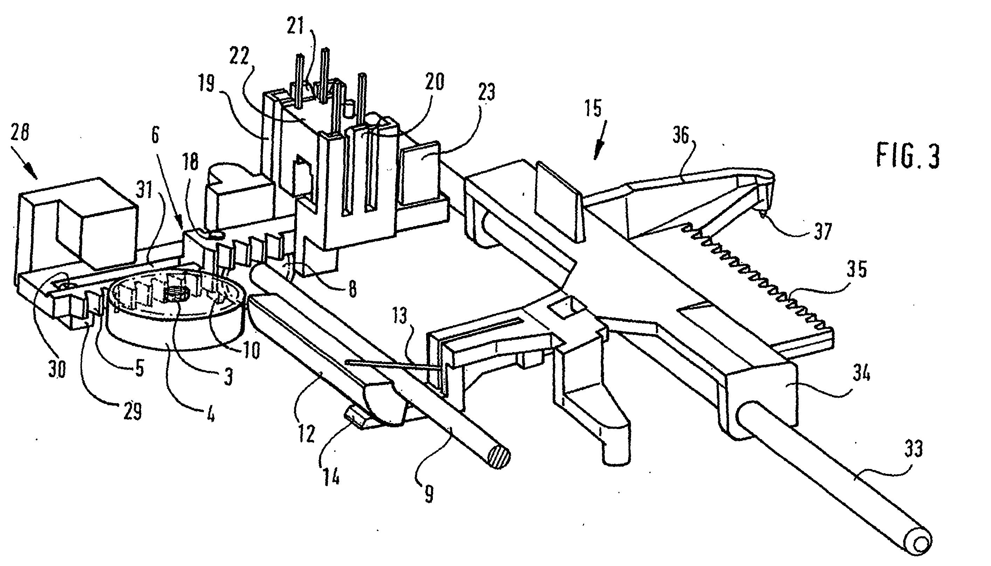

Der Vollständigkeit halber sei noch erwähnt, daß die insbesondere in der Figur 3 dargestellte Mehrspurregistriervorrichtung 15 einen auf einer Führungsstange 33 verschiebbar und schwenkbar gelagerten Schlitten 34 aufweist, welcher über eine Verzahnung 35 getrieblich mit einem Motor in Verbindung steht. Dieser treibt den Schlitten 34 kontinuierlich oszillierend an, so daß der an einem Arm 36 des Schlittens 34 angeordnete Schreibstift 37 innerhalb eines bestimmten Registrierbereiches hin- und herbewegt wird. Zur Aufzeichnung eines Diagrammelementes in den jeweiligen Registrierspuren wird der Schlitten 34 durch die Steuerwelle 9 bzw. den Nocken 12 verschwenkt und der Schreibstift 37 für das Aufzeichnen in jeweils jeder Registrierspur auf den nicht dargestellten Aufzeichnungsträger abgesenkt und wieder angehoben.

## Patentansprüche

1. Registriergerät mit einem Getriebe für den Antrieb einer Steuerwelle (9) einer auf einer Montageplatine (2) angeordneten Mehrspurregistriervorrichtung (15), wobei zwischen den sich im wesentlichen rechtwinklig kreuzenden Achsen eines der Steuerwelle (9) zugeordneten Zahnrades (8) und eines treibenden Zahnrades (4) ein Abstand besteht, der eine zwischengeschaltete Antriebsverbindung erforderlich macht,
**dadurch gekennzeichnet,**
**dass** für die Antriebsverbindung zwischen dem mit der Steuerwelle (9) verbundenen Zahnrad (8) und dem treibenden Zahnrad (4) eine Zahnstange (6) Anwendung findet und
**dass** zur Führung der Zahnstange (6) an der Montageplatine (2) in Outsert-Spritzgiesstechnik hergestellte Führungselemente (28, 19, 25) ausgebildet sind.

2. Registriergerät nach Anspruch 1,
**dadurch gekennzeichnet,**
**dass** die Zahnstange (6) einerseits in einer Kombination einer Stift-Schlitz-Verbindung (30, 31) mit einem die Zahnstange (6) gabelförmig umgreifenden Führungselement (28), andererseits zwischen der Montageplatine (2) und der Stirnseite des Zahnrades (8) der Steuerwelle (9) sowie zwischen einer an einem Halter (19) ausgebildeten Führungsfläche (25) und einer mit einer Flanschfläche (26) des Zahnrades (8) zusammenwirkenden Begrenzungsfläche (27) der Verzahnung (7) geführt ist.

3. Registriergerät nach Anspruch 1,
**dadurch gekennzeichnet,**
**dass** die Zahnstange (6) als Spritzgiessteil hergestellt ist.

## Claims

1. Recording instrument having a gear unit for the drive of a control shaft (9) of a multi-track recording device (15) arranged on a mounting plate (2), there being a distance between the axes, crossing one another essentially at right angles, of a gear (8) assigned to the control shaft (9) and of a driving gear (4), which distance necessitates an interposed drive connection, **characterized in that** a rack (6) is used for the drive connection between the gear (8) connected to the control shaft (9) and the driving gear (4), and **in that** guide elements (28, 19, 25) produced by the outsert injection moulding technique are formed in order to guide the rack (6) on the mounting plate (2).

2. Recording instrument according to Claim 1, **characterized in that** the rack (6) is guided, on the one hand, in a combination of a pin/slot connection (30, 31) with a guide element (28) enclosing the rack (6) in a fork shape and, on the other hand, between the mounting plate (2) and the end face of the gear (8) of the control shaft (9) and between a guide surface (25) formed on a holder (19) and a boundary surface (27), interacting with a flange surface (26) of the gear (8), of the tooth system (7).

3. Recording instrument according to Claim 1, **characterized in that** the rack (6) is produced as an injection moulding.

## Revendications

1. Appareil enregistreur avec un mécanisme pour l'entraînement d'un arbre de commande (9) d'un dispositif enregistreur multipiste (15) disposé sur une platine de montage (2), une distance exigeant une liaison d'entraînement intercalaire existant entre les axes se croisant, pour l'essentiel, perpendiculairement d'une roue dentée (8) associée audit arbre de commande (9) et d'une roue dentée motrice (4),
**caractérisé par le fait**
**que**, pour la liaison d'entraînement entre la roue dentée (8) reliée à l'arbre de commande (9) et la roue dentée motrice (4) est mise en oeuvre une crémaillère (6) et
**que** pour le guidage de ladite crémaillère (6) sont réalisés sur la platine de montage (2) des éléments de guidage (28, 19, 25) fabriqués selon la technique de moulage par injection outsert.

2. Appareil enregistreur selon la revendication 1,
**caractérisé par le fait**
**que** la crémaillère (6) est guidée, d'une part, dans une combinaison d'assemblage par tenon et mortaise (30, 31) avec un élément entourant la crémaillère (6) à la manière d'une fourche, d'autre part, entre la platine de montage (2) et la face frontale de la roue dentée (8) de l'arbre de commande (9) ainsi qu'entre une face de guidage (25) formée sur un support (19) et une surface de limitation (27) de la denture (7) coopérant avec une face de bride (26) de la roue dentée (8).

3. Appareil enregistreur selon la revendication 1,
**caractérisé par le fait**
**que** la crémaillère (6) a été fabriquée selon la technique de moulage par injection.
